# EUROPEAN PATENT APPLICATION

(11) **EP 3 107 063 A1**
(43) Date of publication of application: **21.12.2016**
(21) Application number: 15172221.2
(22) Date of filing: 16.06.2015
(51) Int. Cl.: G06T 5/00, G06T 5/50

(54) **METHOD FOR PROCESSING CAMERA IMAGES**

(71) Applicant: Continental Automotive GmbH, 30165 Hannover (DE)
(72) Inventor: Barrows, Duncan, Hove, BN3 8AP (GB); Bone, Peter, Lewes, BN7 2SA (GB); Gagnon, Peter, Brighton, BN15PS (GB); Gillott, Robert, Waterlooville, PO8 0RU (GB); Grange, Mike, Wormshill, Sittingbourne, ME9 0TY (GB); Rafferty, Simon, Horsham, RH12 1SB (GB); Wibberley, Dave, Brighton, BN1 6RG (GB)
(74) Representative: Büchner, Jörg

(57) **Abstract**

A method for processing camera images received from a vehicle camera (3) capturing in a field of view (FOV) an external scene around a vehicle (1), said vehicle camera (3) having a camera lens (4) being at least partially obscured by obstructions, said method comprising the steps of receiving (S1) a current image frame of the external scene captured by the vehicle camera (3); detecting (S2) obscured image sections in the received current image frame hiding details of the external scene; determining (S3) a direction and speed with which the external scene is moving through the field of view (FOV) of the vehicle camera (3) on the basis of previous image frames of the same vehicle camera (3) stored in a memory; and replacing (S4) the obscured image sections of the received current image frame by image data from recent previous image frames on the basis of the determined direction and speed and the characteristics of the camera lens (4) to provide the hidden details of the external scene.

## Description

The invention relates to a method and apparatus for processing camera images received from a vehicle camera capturing in a field of view an external scene around a vehicle.

A conventional driver assistance system of a vehicle can display to a driver of the vehicle camera images picked up by a vehicle camera observing the surrounding of the vehicle. The driver assistance system can provide valuable assistance to a driver when performing driving manoeuvres such as parking the vehicle in a parking lot. A driver assistance system can be equipped with a surround view system having several vehicle cameras providing a surround view around the vehicle. Each vehicle camera comprises a camera lens for capturing images of the vehicle's surrounding. Further, during movement of the vehicle, dirt spots can occur on the camera lens which at least partially obscure the field of view of the respective vehicle camera. These kind of dirt spots can be caused for example when the vehicle is moving on a dirty road or off-road. Further, dirt spots can be caused by other vehicles moving in the surrounding of the respective vehicle. The dirt spots on the camera lens impair the camera images provided by the vehicle cameras so that the driver assistance system of the vehicle displays partially obscured images of the vehicle surrounding making it for the driver of the vehicle more difficult to perform the necessary driving manoeuvres.

Accordingly, it is an object of the present invention to provide a method and apparatus for improving camera images provided by the driver assistance system of the vehicle.

The invention provides according to a first aspect a method for processing camera images comprising the features of claim 1.

According to the first aspect of the present invention, a method for processing camera images received from a vehicle camera capturing in a field of view an external scene around a vehicle is provided, wherein said vehicle camera has a camera lens being at least partially obscured by obstructions, said method comprising the steps of:
receiving a current image frame of the external scene captured by the vehicle camera,
detecting obscured image sections in the received current image frame hiding details of the external scene,
determining a direction and speed with which the external scene is moving through the field of view of the vehicle camera on the basis of previous image frames of the same vehicle camera stored in a memory, and
replacing the obscured image sections of the received current image frame by image data from recent previous image frames on the basis of the determined direction and speed and the characteristics of the camera lens to provide the hidden details of the external scene.

In a possible embodiment of the method for processing camera images according to the first aspect of the present invention, the previous image frames of the vehicle camera are stored in the memory as full or partial image frames.

In a further possible embodiment of the method for processing camera images according to the first aspect of the present invention, if obscured image sections in the received current image frame are detected, it is decided, whether the camera lens of the vehicle camera requires cleaning.

In a still further possible embodiment of the method according to the first aspect of the present invention, wherein if it is detected that a cleaning of the camera lens of the vehicle camera is required, a corresponding indication is provided to the driver of the vehicle.

In a still further possible embodiment of the method according to the first aspect of the present invention, wherein if it is detected that a cleaning of the camera lens of the vehicle camera is required, the camera lens of the vehicle camera is automatically cleaned to remove the obstructions from the camera lens.

In a possible embodiment of the method according to the first aspect of the present invention, the different method steps are performed in real-time.

The invention further provides according to a second aspect a vehicle camera comprising a camera pre-processing unit adapted to pre-process camera images captured by said vehicle camera by performing the method according to the first aspect of the present invention.

The invention further provides according to a third aspect a driver assistance system comprising at least one vehicle camera according to the second aspect of the present invention and an image processing unit receiving the pre-processed camera images from the pre-processing unit of the vehicle camera.

The invention further provides according to a fourth aspect a driver assistance system comprising at least one vehicle camera to receive camera images captured by the vehicle camera, a pre-processing unit adapted to pre-process the received camera images by performing the method according to the first aspect of the present invention and comprising an image processing unit adapted to process the pre-processed camera images.

The invention further provides according to a fifth aspect a camera image recovering programme comprising instructions configured to perform the method according to the first aspect of the present invention.

The invention further provides according to a sixth aspect a vehicle comprising a driver assistance system according to the third aspect of the present invention, wherein the pre-processing unit is activated when the vehicle is moving.

In a possible embodiment of the vehicle according to the sixth aspect of the present invention, the camera lens of the vehicle camera is at least partially obscured by obstructions comprising dirt on the camera lens caused by the moving vehicle itself or by other vehicles in the vicinity of the vehicle.

In the following, possible embodiments of the different aspects of the present invention are described in more detail with reference to the enclosed figures.
- Figure 1: shows a block diagram for illustrating a possible exemplary embodiment of a driver assistance system within a vehicle according to the present invention;
- Figure 2: shows a flowchart of a possible exemplary embodiment of a method for processing camera images according to an aspect of the present invention.

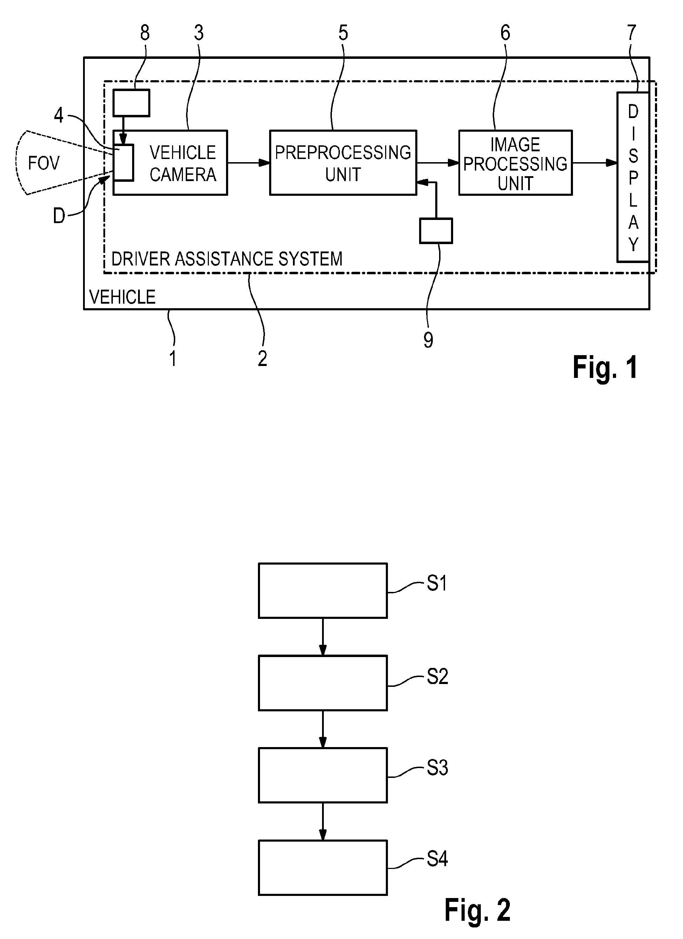

Figure 1 shows a block diagram of a possible exemplary embodiment of a vehicle 1 comprising a driver assistance system 2 according to the present invention. The driver assistance system 2 comprises at least one vehicle camera 3 capturing in a field of view FOV an external scene around the vehicle 1. The vehicle camera 3 comprises a camera lens 4 to capture images of the surrounding. The vehicle camera 3 can be in a possible embodiment a wide-angle camera which is adapted to cover a wide-visible range in order to provide a maximum possible viewing area or field of view FOV. The vehicle camera 3 provides camera images in image frames to a pre-processing unit 5 of the driver assistance system 2 as illustrated in Figure 1. The pre-processing unit 5 is adapted to pre-process the received camera images. The pre-processing unit 5 receives a current image frame of the external scene captured by the vehicle camera 3. The pre-processing unit 5 processes the received image frame to detect obscured image sections in the received current image frame hiding details of the external scene. The pre-processing unit 5 is further adapted to determine a direction and speed with which the external scene is moving through the field of view FOV of the vehicle camera 3 on the basis of previous image frames of the same vehicle camera 3 stored in a memory, in particular a buffer memory, adapted to store image frames of the vehicle camera 3. The pre-processing unit 5 is further configured to replace the obscured image sections of the received current image frame by image data from recent previous image frames on the basis of the determined direction and/or speed and on the basis of the characteristics of the camera lens 4 to provide the hidden details of the external scene. The pre-processed camera images are supplied to an image processing unit 6 of the driver assistance system 2 as shown in Figure 1.

The pre-processing unit 5 can be integrated in the vehicle camera 3. In a possible embodiment, the driver assistance system 2 can comprise several vehicle cameras 3 each comprising an integrated pre-processing unit 5 as illustrated in Figure 1. The vehicle cameras 3 provide a stream of pre-processed camera images to the image processing unit 6 which is adapted to process the pre-processed camera images received from the pre-processing units 5 of the different vehicle cameras 3. In a possible embodiment, the image processing unit 6 can merge the different received pre-processed camera images to a surround view displayed to a driver of the vehicle 1 by means of a display 7. In a possible embodiment, the pre-processing unit 5 is adapted to detect small obstructions on the camera lens 4 such as spots of dirt. A tracking algorithm determines the direction and speed with which the scene is moving through the field of view FOV of the vehicle's camera 3. Previous images generated by the vehicle's camera 3 can be stored either as full or partial frames in a memory of the driver assistance system 2. Given the direction and rate of travel of the vehicle camera 3, the location of the dirt spots or obstructions and the characteristics of the camera lens 4, the pre-processing unit 5 can determine, whether it is possible to blend in data from a recent previous image stored in the memory to provide the obscured detail. Obscured image sections of the received current image frame are then replaced by image data from previous image frames on the basis of the determined direction and speed and the characteristics of the camera lens 4 to provide the hidden details of the captured external scene.

If obscured image sections in the received current image frame are detected by the pre-processing unit 5, it can be decided, whether the camera lens 4 of the vehicle camera 3 requires cleaning. If it is detected that a cleaning of the camera lens 4 of the vehicle camera 3 is required, the pre-processing unit 5 can provide a corresponding indication to the driver of the vehicle, for example by inserting a corresponding indication into the image displayed to the driver by means of the display 7. In a further possible embodiment, the pre-processing unit 5 can generate an indication signal supplied to an actuator 8 which cleans automatically the affected camera lens 4 to remove the obstructions from the camera lens. In a possible embodiment, the camera lens 4 can be cleaned by means of wiper mechanism. In a possible embodiment, the driver assistance system 2 can further comprise a sensor unit 9 to determine, whether the vehicle 1 is moving. In a possible embodiment, the pre-processing unit 5 is activated when the vehicle 1 starts to move. After the vehicle 1 has stopped moving, the pre-processing unit 5 can be automatically deactivated after a predetermined period of time. When the vehicle 1 is moving, dirt from the road or other moving vehicles can obscure the camera lens 4 as illustrated in Figure 1. With the driver assistance system 2 according to the present invention as shown in Figure 1, when vehicle 1 with its vehicle cameras 3 is moving, image details missing from the current frame because the camera unit 4 is obscured by spots of dirt D can be obtained from earlier frames received from the same vehicle camera 3. Recovery of the obscured image sections is performed depending upon the direction of travel and the characteristics of the camera lens 4 by using image data from recent previous image frames stored temporarily in a buffer memory.

Figure 2 shows a flowchart for illustrating a possible exemplary embodiment of a method for processing camera images received from a vehicle camera 3 according to a further aspect of the present invention. The vehicle camera 3 has a camera lens 4 which may be partially obscured by obstructions such as spots of dirt D. In a first step S1, the current image frame of the external scene captured by the vehicle camera 3 is received by the pre-processing unit 5. In a further step S2, obscured image sections in the received current image frame hiding details of the external scene are detected, for instance by a corresponding dirt detection algorithm performed by the pre-processing unit 5. In a further step S3, a direction and speed with which the external scene is moving through the field of view FOV of the vehicle camera 3 is determined on the basis of previous image frames of the same vehicle camera 3 stored in a memory. In a further step S4, the obscured image sections of the received current image frame are replaced by image data from recent previous image frames on the basis of the determined direction and speed and the characteristics of the camera lens 4 to provide the hidden details of the external scene captured by the vehicle camera 3. In step S2, if obscured image sections in the received current frame are detected, it can be decided, whether the camera lens 4 of the vehicle camera 3 requires cleaning. If it is detected that a cleaning of the vehicle camera 3 is required, a corresponding indication can be supplied to the driver of the vehicle. Further, the camera lens 4 can be automatically cleaned to remove the obstructions from the camera lens 4. The steps illustrated in Figure 2 can be performed in a possible embodiment in real-time. By performing the pre-processing of the camera images, the quality of the camera images provided by the vehicle camera 3 can be significantly improved. The driver assistance system 2 can be used in any vehicle such as a car or a truck. The number of vehicle cameras 3 and corresponding pre-processing units 5 can vary in different embodiments of the driver assistance system 2. Further embodiments are possible. In a possible embodiment, if it is not possible to clean the vehicle camera lens 4 within a predetermined time period, a corresponding notification or warning signal can be generated.

## Claims

1. A method for processing camera images received from a vehicle camera (3) capturing in a field of view (FOV) an external scene around a vehicle (1),
said vehicle camera (3) having a camera lens (4) being at least partially obscured by obstructions,
said method comprising the steps of:
(a) receiving (S1) a current image frame of the external scene captured by the vehicle camera (3);
(b) detecting (S2) obscured image sections in the received current image frame hiding details of the external scene;
(c) determining (S3) a direction and speed with which the external scene is moving through the field of view (FOV) of the vehicle camera (3) on the basis of previous image frames of the same vehicle camera (3) stored in a memory; and
(d) replacing (S4) the obscured image sections of the received current image frame by image data from recent previous image frames on the basis of the determined direction and speed and the characteristics of the camera lens (4) to provide the hidden details of the external scene.

2. The method according to claim 1, wherein the previous image frames of the vehicle camera (3) are stored in the memory as full or partial image frames.

3. The method according to claim 1 or 2, wherein if obscured image sections in the received current image frame are detected, it is decided, whether the camera lens (4) of the vehicle camera (3) requires cleaning.

4. The method according to claim 3, wherein if it is detected that a cleaning of the camera lens (4) of the vehicle camera (3) is required, a corresponding indication is provided to the driver of the vehicle and/or the camera lens (4) is automatically cleaned to remove the obstructions from the camera lens (4).

5. The method according to one of the preceding claims 1 to 4, wherein the method steps are performed in real-time.

6. A vehicle camera (3) comprising a camera pre-processing unit (5) adapted to pre-process camera images captured by said vehicle camera (3) by performing the method according to one of the preceding claims 1 to 5.

7. A driver assistance system (2) comprising at least one vehicle camera (3) according to claim 6 and an image processing unit (6) receiving the pre-processed camera images from the pre-processing unit (5) of the vehicle camera (3).

8. A driver assistance system (2) comprising at least one vehicle camera (3) to receive camera images captured by the vehicle camera (3),
a pre-processing unit (5) adapted to pre-process the received camera images by performing the method according to one of the preceding claims 1 to 5; and
an image processing unit (6) adapted to process the pre-processed camera images.

9. A camera image recovering programme comprising instructions configured to perform the method according to one of the preceding claims 1 to 5.

10. A vehicle (1) comprising a driver assistance system (2) according to claim 7 or 8, wherein the pre-processing unit (5) is activated when the vehicle (1) is moving.

11. The vehicle according to claim 10, wherein the camera lens (4) of the vehicle camera (3) is at least partially obscured by obstructions comprising dirt on the camera lens (4) caused by the moving vehicle (1) itself or by other vehicles in the vicinity of the vehicle (1).
